# EUROPÄISCHE PATENTANMELDUNG

(11) **EP 4 660 721 A1**
(43) Veröffentlichungstag der Anmeldung: **10.12.2025**
(21) Anmeldenummer: 25181274.9
(22) Anmeldetag: 06.06.2025
(51) Int. Cl.: G05B 15/02, F24D 19/10, G05D 23/19

(54) **VERFAHREN ZUM BETRIEB EINES SMARTHOME-SYSTEMS**

(30) Priorität: 07.06.2024 DE 102024205282
(71) Anmelder: Viessmann Holding International GmbH, 35108 Allendorf (Eder) (DE)
(72) Erfinder: PASCHKE, Fabian, 01127 Dresden (DE); JAREMA, Michal, 51-126 Wroclaw (PL)
(74) Vertreter: FDST Patentanwälte

(57) **Zusammenfassung**

Die Erfindung betrifft ein Verfahren (40) zum Betrieb eines Smarthome-Systems (16), das einen Wärmemengenzähler (20) und mehrere Sensoren (28) aufweist, die jeweils einem Wärmeabgeber (14) zugeordnet sind. Mittels des Wärmemengenzählers (20) wird eine von einem zentralen Wärmebereitsteller (8) bereitgestellte Wärme ermittelt, und mittels zumindest eines der Sensoren (28) wird ein Messwert erfasst, der die von dem jeweiligen Wärmeabgeber (14) abgegebene Wärme charakterisiert. Anhand der bereitgestellten Wärme und des Messwerts wird ein dem jeweiligen Wärmeabgeber (14) zugeordneter Wärmeanteil ermittelt. Die Erfindung betrifft ferner ein Verfahren (50) zur Ermittlung von Skalierkonstanten sowie ein Smarthome-System (16).

## Beschreibung

Die Erfindung betrifft ein Verfahren zum Betrieb eines Smarthome-Systems, das mehrere Sensoren aufweist, die jeweils einem Wärmeabgeber zugeordnet sind. Ferner betrifft die Erfindung ein Smarthome-System und ein Verfahren zur Ermittlung von Skalierkonstanten.

In zunehmendem Maße werden in Haushalten oder Büroeinheiten sogenannte Smarthome-Systeme verwendet. Diese weisen üblicherweise einen zentralen Controller auf, der mit mehreren Aktoren und/oder Sensoren signaltechnisch verbunden ist. Mittels des Controllers werden dabei beispielsweise die Aktoren anhand von mittels der Sensoren erfassten Daten gesteuert, sodass ein abgestimmtes Verhalten der Aktoren untereinander ermöglicht ist. Eine Kombination eines derartigen Aktors/Sensors ist beispielsweise ein Thermostat, das einem Wärmeabgeber, wie einem Radiator, zugeordnet ist. Auf diese Weise ist ein Einstellen einer Raumtemperatur desjenigen Raums ermöglicht, dem der Wärmeabgeber/das Thermostat zugeordnet ist. Dies kann hierbei im Wesentlichen unabhängig von der Temperatureinstellung eines anderen Raums erfolgen, dem ein anderer entsprechender Wärmeabgeber/Thermostat zugeordnet ist.

Auf diese Weise ist es beispielsweise möglich, Räume, die selten oder nur zeitweise verwendet werden, lediglich bei Gebrauch zu wärmen, was den Energiebedarf des Haushalts reduziert, ohne dass hierbei Komforteinbußen vorhanden sind. Dabei ist es jedoch möglich, dass ein Nutzer in einem ersten Raum eine vergleichsweise geringe Raumtemperatur einstellt. Dies kann jedoch dazu führen, dass bei einem benachbarten zweiten Raum zum Halten der ursprünglichen Temperatur ein erhöhter Wärmebedarf vorherrscht, da ein Wärmeeintrag über die zu dem ersten Raum angrenzende Wand reduziert ist oder über die Wand Wärme in den ersten Raum abgegeben wird. Der deswegen zusätzliche Energiebedarf kann die Einsparung für den ersten Raum gegebenenfalls übertreffen, sodass mehr Energie benötigt als eingespart wird. Dies ist für den Nutzer nicht direkt überprüfbar, und der zusätzliche Energiebedarf wird beispielsweise erst bei einer Heizkostenabrechnung realisiert. Dabei ist der erhöhte Energiebedarf nicht direkt der eingestellten Raumtemperatur des ersten Raums zuordenbar, weswegen der Nutzer keine geeignete Abhilfe/Änderung durchführen kann.

Der Erfindung liegt die Aufgabe zugrunde, ein besonders geeignetes Verfahren zum Betrieb eines Smarthome-Systems sowie ein besonders geeignetes Verfahren zur Ermittlung von Skalierkonstanten als auch ein besonders geeignetes Smarthome-System anzugeben, wobei vorteilhafterweise eine Transparenz erhöht und/oder eine Einstellung/Wartung vereinfacht ist, und wobei geeigneterweise Herstellungskosten nicht erhöht sind.

Hinsichtlich des Verfahrens zum Betrieb des Smarthome-Systems wird diese Aufgabe durch die Merkmale des Anspruchs 1, hinsichtlich des Verfahrens zur Ermittlung von Skalierkonstanten durch die Merkmale des Anspruchs 7 und hinsichtlich des Smarthome-Systems durch die Merkmale des Anspruchs 10 erfindungsgemäß gelöst. Vorteilhafte Weiterbildungen und Ausgestaltungen sind Gegenstand der jeweiligen Unteransprüche.

Das Verfahren dient dem Betrieb eines Smarthome-Systems. Das Smarthome-System ist im Montagezustand beispielsweise einem Haushalt, wie einem Privathaushalt oder einer Büroeinheit, oder zum Beispiel einem Hotel zugeordnet, sodass es sich insbesondere um ein Building Management System (BMS) handelt. Geeigneterweise weist das Smarthome-System einen zentralen Controller auf, der insbesondere das Steuergerät des Smarthome-Systems darstellt. Vorzugsweise umfasst das Smarthome-System einen oder mehrere Aktoren, mittels derer insbesondere eine Beeinflussung und/oder Durchführung von bestimmten Funktionen ermöglicht ist. Hierbei ist der Aktor zum Beispiel einem Raum zugeordnet.

Vorzugsweise ist der Controller mit dem Aktor signaltechnisch verbunden, vorzugsweise mittels Funks.

Das Smarthome-System weist mehrere Sensoren auf, die jeweils einem Wärmeabgeber zuordenbar sind. Vorzugsweise sind im Montagezustand die Sensoren jeweils dem jeweiligen Wärmeabgeber zugeordnet. Mittels der Wärmeabgeber kann bei Betrieb Wärme an einen zugordneten Raum abgegeben werden. Die Wärme kann dabei negativ sein, sodass eine Kühlung realisiert ist. Besonders bevorzugt jedoch wird bei Betrieb des Wärmeabgebers eine positive Wärme abgegeben, insbesondere an den zugeordneten Raum. Insbesondere ist hierbei der Wärmeabgeber nach Art eines Radiators oder Heizkörpers ausgestaltet. Alternativ hierzu ist zum Beispiel der oder sämtliche Wärmeabgeber nach Art einer Flächenheizung ausgestaltet, beispielsweise nach Art einer Deckenheizung, Fußbodenheizung oder einer Wandheizung. Zusammenfassend dienen die Wärmeabgeber insbesondere dem Übertragen von Wärme zwischen dem zugeordneten Raum und einem zu dem jeweiligen Wärmeabgeber geleiteten Fluid, insbesondere Wasser, sodass mittels der Wärmeabgebers eine Raumtemperatur des jeweils zugeordneten Raums verändert werden kann.

Mittels des jeweiligen Sensors ist es hierbei möglich, einen Messwert zu erfassen, mittels dessen die an dem jeweiligen Wärmeabgeber abgegebene Wärme charakterisiert wird. Der Messwert entspricht dabei beispielsweise der abgegebenen Wärme direkt oder korrespondiert insbesondere zu dieser. Beispielsweise wird als Messwert ein Zustand und/oder Betriebsdaten des jeweiligen Wärmeabgebers herangezogen. Vorzugsweise sind die Sensoren signaltechnisch mit dem Controller verbunden, vorzugsweise mittels Funks. Beispielsweise umfasst das Smarthome-System noch einen oder mehrere weitere Sensoren, wobei diese zum Beispiel ebenfalls einem der Wärmeabgeber zugeordnet oder unabhängig von diesen sind. Zusammenfassend ist insbesondere jeder Wärmeabgeber einem von mehreren Räumen zugeordnet, wobei beispielsweise einem Raum mehrere der Wärmeabgeber und somit auch der Sensoren zugeordnet sind. Alternativ hierzu ist jedem Raum lediglich einer der Wärmeabgeber zugeordnet.

Zudem umfasst das Smarthome-System einen Wärmemengenzähler, der einem zentralen Wärmebereitsteller zugeordnet ist. Bei dem Wärmemengenzähler handelt es sich insbesondere um einen Wärmezähler. Der zentrale Wärmebereitsteller, der auch lediglich als Wärmebereitsteller bezeichnet wird, ist insbesondere hydraulisch mit sämtlichen Wärmeabgebern verbunden, sodass die mittels des Wärmebereitstellers bereitgestellte Wärme auf die einzelnen Wärmeabgeber aufgeteilt wird. Der zentrale Wärmebereitsteller ist hierbei beispielsweise eine Zentralheizung, die zum Beispiel eine Wärmepumpe und/oder eine Gastherme umfasst. Alternativ oder in Kombination hierzu umfasst der zentrale Wärmebereitsteller einen Anschluss an ein Fernwärmenetz und/oder weist eine Klimaanlage auf. Sofern mittels des zentralen Wärmebereitstellers mehrere Heizkreise oder dergleichen betrieben werden, ist der Wärmemengenzähler beispielsweise derart angeordnet, dass dieser sämtlichen oder lediglich einigen oder einem der Heizkreisen zugordnet ist. Dabei sind jedoch die Wärmeabgeber, denen die Sensoren zugeordnet sind, dem oder den Heizkreisen zugeordnet, denen auch der Wärmemengenzähler zugeordnet ist.

Bei dem Verfahren wird mittels des Wärmemengenzählers eine von dem zentralen Wärmebereitsteller bereitgestellte Wärme ermittelt. Hierfür wird beispielsweise die von dem Wärmebereitsteller benötigte Energie ermittelt, beispielsweise die elektrische Energie oder der Bedarf eines Brennstoffs. Alternativ wird die bereitgestellte Wärme mittels eines Stromzählers ermittelt, mittels dessen der Wärmebereitsteller betrieben ist. Besonders bevorzugt jedoch wird mittels des Wärmemengenzählers die bereitgestellte Wärme anhand einer sogenannten Vorlauftemperatur ermittelt, die mittels des Wärmebereitstellers und gegebenenfalls mittels eines Mischventils realisiert wird. In einer Abwandlung ist insbesondere das Mischventil ein Bestandteil des Wärmebereitstellers. Die Vorlauftemperatur korrespondiert dabei zweckmäßigerweise zu der Temperatur des Fluids, das von dem Wärmebereitsteller zu den Wärmeabgebern geleitet wird, also mittels dessen die Wärmeabgeber beaufschlagt werden. Zweckmäßigerweise wird mittels des Wärmemengenzählers die Vorlauftemperatur gemessen. Hierfür ist der Wärmemengenzähler beispielsweise einer (Heiz-)Leitung/Heizkreis zugeordnet, und/oder mittels des Wärmemengenzählers werden entsprechende Betriebsdaten des Wärmebereitstellers ausgelesen. Vorzugsweise wird die bereitgestellte Wärme anhand der Vorlauf- und Rücklauftemperatur sowie des Massenstroms bzw. anderer charakterisierender Größen des Fluids ermittelt. Als charakterisierende Größen wird zum Beispiel ein Massenstrom des Fluids verwendet, der insbesondere anhand einer Drehzahl einer (Heizungs-)Pumpe ermittelt wird.

Ferner wird mittels zumindest eines der Sensoren der entsprechende Messwert erfasst, der somit die von dem jeweiligen/zugeordneten Wärmeabgeber abgegebene Wärme charakterisiert. Beispielsweise wird dies lediglich bei einem der Sensoren/Wärmeabgeber durchgeführt, oder beispielsweise bei sämtlichen Sensoren/ Wärmeabgebern oder zumindest einem Teil der Sensoren/Wärmeabgeber. Vorzugsweise erfolgt das Ermitteln der bereitgestellten Wärme sowie das Erfassen der Messwerte im Wesentlichen zeitgleich, wofür geeigneterweise eine entsprechende Abfrage mittels des etwaigen Controllers durchgeführt wird.

Anhand der bereitgestellten Wärme und des Messwerts wird ein dem jeweiligen Wärmeabgeber zugeordneter Wärmeanteil ermittelt. Beispielsweise wird der Wärmeanteil lediglich für einen der Wärmeabgeber ermittelt, oder geeigneterweise für sämtliche Wärmeabgeber, oder zumindest für die, für die ein entsprechender Messwert erfasst wurde.

Somit wird die aggregierte und mittels des Wärmemengenzählers erfasste bereitgestellte Wärme auf die einzelnen Wärmeabgeber disaggregiert, und die entsprechenden Wärmeanteile sind dann bekannt. Zusammenfassend ist somit für einen Nutzer ermittelbar, wie die mittels des Wärmemengenzählers bereitgestellte Wärme zu den jeweiligen Wärmeabgebern geleitet, also aufgeteilt, wird, weswegen eine Transparenz erhöht ist, insbesondere hinsichtlich eines Energiebedarfs. Folglich ist für den Nutzer vergleichsweise im Wesentlichen unverzüglich ermittelbar, ob ein einem der Wärmeabgeber zugeordneter Wärmeanteil übermäßig erhöht ist, sodass entsprechend Abhilfe geschaffen werden kann. Somit ist eine Einstellung und Wartung des Smarthome-Systems verbessert. Zur Durchführung des Verfahrens sind beispielsweise lediglich die Sensoren zusätzlich erforderlich. Besonders bevorzugt jedoch werden die Sensoren auch zur Regelung der Wärmeabgeber herangezogenen, sodass keine zusätzliche Hardware benötigt wird, weswegen Herstellungskosten und Installationskosten nicht erhöht sind. Vielmehr wird eine bereits vorhandene Hardware genutzt, wobei lediglich eine Funkfunktionalität erweitert ist.

Beispielsweise wird der Wärmeanteil lediglich ermittelt, wenn eine entsprechende Nutzeranfrage vorliegt. Besonders bevorzugt erfolgt dies kontinuierlich, vorzugsweise zu bestimmten diskreten Zeitpunkten, beispielsweise jede Minute, alle 5 Minuten, alle 10 Minuten, stündlich oder täglich. Somit ist ein Energiebedarf zur Durchführung des Verfahrens nicht übermäßig erhöht, wobei dennoch eine vergleichsweise genau zeitaufgelöste Ermittlung der Wärmeanteile ermöglicht ist. Geeigneterweise wird der jeweils ermittelte Wärmeanteil in einem Speicher abgespeichert, beispielsweises des jeweiligen Sensors oder zweckmäßigerweise des etwaigen Controllers. Somit ist der zeitliche Verlauf des jeweiligen Wärmeanteils nachfolgend überprüfbar, wobei auch eine Auswertung über einen längeren Zeitraum erfolgen kann. Somit ist es beispielsweise möglich, zeitliche Effekte, wie eine Sonneneinstrahlung oder eine veränderte Außentemperatur zu berücksichtigen, was die nachfolgende Einstellung einer entsprechenden Raumtemperatur des jeweiligen Wärmeabgebers oder zumindest des Smarthome-Systems erleichtert.

Beispielsweise wird mittels eines oder jeder der Sensoren als Messwert eine Raumtemperatur gemessen oder zumindest erfasst, wobei der jeweilige Sensor zum Beispiel beliebig bezüglich des jeweiligen Wärmeabgebers oder in einem bestimmten Abstand dazu angeordnet ist. Somit ist mittels der Sensoren auch eine vergleichsweise genaue Regelung der Raumtemperatur ermöglicht. Alternativ hierzu ist der, einige oder jeder Sensor einem Ventil zugeordnet, mittels dessen der Wärmeabgeber eingestellt ist. Dabei wird mittels des Ventils vorzugsweise eine Wärmeaufnahme des jeweiligen Wärmeabgebers und somit dessen Wärmeabgabe eingestellt, vorzugsweise geregelt. Hierbei wird insbesondere die Menge, insbesondere der Massenstrom, des durch den Wärmeabgeber geleiteten Fluides, insbesondere des (Heiz-)Wassers, eingestellt. Zweckmäßigerweise sind das Ventil und der jeweilige Sensor als gemeinsame Baueinheit ausgestaltet, insbesondere als sogenanntes Thermostat.

Zum Beispiel wird hierbei mittels des Sensors eine Temperatur gemessen, anhand derer dann das Ventil beispielsweise eingestellt wird, sodass eine Regelung auf eine bestimmte vorgegebene (Soll-)Raumtemperatur erfolgt. Alternativ oder in Kombination hierzu korrespondiert der Messwert zu einer Ventilstellung, also der Einstellung des Ventils. Hierbei wird beispielsweise die Ventilstellung direkt gemessen oder zum Beispiel anhand von Betriebsdaten abgeleitet, insbesondere einer an das jeweilige Ventil angelegten elektrischen Spannung. Beispielsweise wird hierbei die elektrische Spannung gemessen, oder mittels des Sensors wird die elektrische Spannung aus den Betriebsdaten ausgelesen. Mit anderen Worten wird die zur Ansteuerung des Ventils verwendete elektrische Spannung oder ein zur Ansteuerung des Ventils verwendeter Stellwert als jeweiliger Messwert verwendet. Somit ist ein zusätzlicher Hardwarebedarf weiter verringert. Vorzugsweise wird bei sämtlichen Sensoren der Messwert auf diese Weise ermittelt, oder beispielsweise lediglich bei einem Teil davon, zum Beispiel einem oder mehreren. Somit ist insbesondere eine Flexibilität erhöht.

Zum Beispiel korrespondiert oder entspricht der Messwert der Raumtemperatur des Raums, dem der jeweilige Wärmeabgeber zugeordnet ist, und in dem sich dieser insbesondere befindet. Alternativ hierzu entspricht der Messwert einem sonstigen Wert, und die Raumtemperatur wird beispielsweise nicht berücksichtigt. Besonders bevorzugt jedoch entspricht oder korrespondiert der Messwert einem sonstigen Wert, wie der Ventilstellung, und die dem jeweiligen Wärmeabgeber zugeordnete Raumtemperatur wird zusätzlich berücksichtigt. Vorzugsweise ist hierbei der Sensor ein Bestandteil des etwaigen Thermostats, mittels dessen insbesondere die Ventilstellung ermittelt und/oder vorgegeben wird, und/oder mittels dessen die Raumtemperatur gemessen wird, zum Beispiel direkt oder indirekt. Vorzugsweise wird hierbei die Differenz zwischen der etwaig gemessenen Vorlauftemperatur, die insbesondere zu der bereitgestellten Wärme korrespondiert oder zumindest in funktionellem Zusammenhang zu dieser steht, und der Raumtemperatur berücksichtigt. Zum Beispiel ist dabei der Wärmanteil proportional zu der Differenz, insbesondere sofern der Massenstrom konstant ist. Auf diese Weise wird somit berücksichtigt, ob anhand der bereitgestellten Wärme überhaupt eine Wärmeabgabe/-aufnahme zu dem zugeordneten Raum erfolgen kann, also insbesondere ob die Raumtemperatur verändert werden kann. Folglich ist eine Genauigkeit bei der Ermittlung des zugeordneten Wärmeanteils verbessert, weswegen genauere Rückschlüsse gezogen werden können, zum Beispiel auch auf ein Fehlverhalten und/oder ein geöffnetes Fenster.

Alternativ oder besonders bevorzugt in Kombination hierzu wird bei der Ermittlung des Wärmeanteils eine Ausgestaltung des jeweiligen Wärmeabgebers berücksichtigt. Hierbei wird insbesondere überprüft, ob der Wärmeabgeber als Radiator oder Flächenheizung ausgestaltet ist. Die Ausgestaltung des Wärmeabgebers wird hierbei beispielsweise von dem Nutzer hinterlegt, insbesondere mittels Programmierung des etwaigen Controllers. Alternativ ist beispielsweise den unterschiedlichen Arten von Wärmeabgebern eine unterschiedliche Art von Sensor zugeordnet, sodass anhand der Ausgestaltung des Sensors die Ausgestaltung des jeweiligen Wärmeabgebers implizit hinterlegt ist. Vorzugsweise wird die Differenz zwischen der Vorlauftemperatur und der Raumtemperatur erstellt und potenziert, wobei der Exponent abhängig von der Ausgestaltung des jeweiligen Wärmeabgebers gewählt ist. Somit wird insbesondere das unterschiedliche Wärmeübertrageverhalten der unterschiedlichen Ausgestaltungen der Wärmeabgeber berücksichtigt.

Beispielsweise wird lediglich anhand des jeweiligen Messwerts und der (ermittelten) bereitgestellten Wärme der entsprechende Wärmeanteil ermittelt. Bevorzugt jedoch wird zudem die Raumtemperatur und/oder die Ausgestaltung des jeweiligen Wärmeabgebers berücksichtigt. Dabei kann die Konfiguration des Smarthome-Systems vergleichsweise zeitsparend und/oder aufwandsarm erfolgen, und dieses ist vergleichsweise schnell einsatzbereit, wobei jedoch eine Genauigkeit verbessert ist. Besonders bevorzugt jedoch wird bei der Ermittlung des Wärmeanteils eine dem jeweiligen Wärmeabgeber zugeordnete Skalierkonstante berücksichtigt. Zum Beispiel wird der Wärmeanteil lediglich anhand der Skalierkonstanten, des Messwerts und der bereitgestellten Wärme ermittelt oder vorzugsweise zudem auch anhand der Raumtemperatur und/oder der Ausgestaltung des jeweiligen Wärmeabgebers.

Beispielsweise entspricht der Wärmeanteil dem Produkt aus der jeweiligen Skalierkonstanten und der Ventilstellung oder dem Produkt aus der jeweiligen Skalierkonstanten der Ventilstellung und der Differenz zwischen der Vorlauftemperatur und der Raumtemperatur, wobei die Differenz zum Beispiel mit dem entsprechend gewählten Exponenten potenziert ist. Alternativ oder in Kombination umfasst der Wärmeanteil einen Term, der proportional zur Differenz einer Solltemperatur für den Raum und der Raumtemperatur oder zu der Differenz der Vorlauftemperatur und der Solltemperatur (Soll-Raumtemperatur) ist, zumindest in einem bestimmten Wertebereich für diese Differenz.

Anhand der Skalierkonstanten erfolgt insbesondere eine Anpassung auf den etwaigen Haushalt, in dem das Smarthome-System verwendet wird. Vorzugsweise wird mittels der Skalierkonstanten ein Raumvolumen, eine Isolierung und/oder eine sonstige Ausgestaltung des Raums berücksichtigt, in dem der jeweils zugeordnete Wärmeabgeber angeordnet ist. Alternativ oder in Kombination hierzu wird auf diese Weise insbesondere eine Isolation oder Ausgestaltung von Leitungen/Rohren berücksichtigt, mittels derer das (Heiz-)Wasser von dem Wärmebereitsteller zu dem jeweiligen Wärmegeber geleitet wird, und/oder eine Größe/Leistungsfähigkeit des Wärmeabgebers selbst, insbesondere dessen Nominalleistung. Aufgrund der jeweiligen Skalierkonstanten ist dabei mittels einer einzigen Zahl eine Korrektur ermöglicht, weswegen ein Aufwand bei der Ermittlung des Wärmeanteils verringert, jedoch eine Genauigkeit verbessert ist. In einer Weiterbildung werden bei der Ermittlung des jeweiligen Wärmeanteils eine weitere oder mehre weitere Skalierkonstanten herangezogen, die zum Beispiel mittels unterschiedlicher Rechenoperationen mit den (zeitlich) veränderlichen Werten, wie dem Messwert und/oder der bereitgestellten Wärme verknüpft werden. Dabei sind die jeweiligen Skalierkonstanten vorzugsweise konstant.

Es ist dabei möglich, dass beispielsweise unterschiedlichen Wärmeabgebern die gleiche Skalierkonstante zugeordnet ist, oder die Skalierkonstanten zwischen sämtlichen oder einer Anzahl an Wärmeabgebern unterscheiden sich. Die Skalierkonstanten werden beispielsweise manuell vorgegeben/eingegeben, insbesondere von dem Nutzer oder einer Fachkraft. Alternativ hierzu werden diese analytisch ermittelt. Beispielsweise werden die Skalierkonstanten mittels eines Minimierungsalgorithmus ermittelt. Besonders bevorzugt jedoch werden diese gemäß einem Verfahren zur Ermittlung von Skalierkonstanten ermittelt.

Das andere Verfahren dient der Ermittlung von Skalierkonstanten, die insbesondere bei dem Verfahren zum Betrieb des Smarthome-Systems verwendet werden, das einen Wärmemengenzähler, der insbesondere einem zentralen Wärmebereitsteller zugeordnet ist, und mehrere Sensoren aufweist, die jeweils einem Wärmeabgeber zugeordnet sind. Bei dem Verfahren zum Betrieb des Smarthome-Systems wird dabei mittels des Wärmemengenzählers eine von einem zentralen Wärmebereitsteller bereitgestellte Wärme ermittelt, und mittels zumindest eines der Sensoren wird ein Messwert erfasst, der die von dem jeweiligen Wärmeabgeber abgegebene Wärme charakterisiert. Anhand der (ermittelten) bereitgestellten Wärme und des Messwerts wird ein dem jeweiligen Wärmeabgeber zugeordneter Wärmeanteil ermittelt. Bei der Ermittlung des Wärmeanteils wird dabei eine dem jeweiligen Wärmeabgeber zugeordnete Skalierkonstante berücksichtigt.

Bei dem Verfahren zur Ermittlung der Skalierkonstanten wird hierbei für mehrere Zeitpunkte die bereitgestellte Wärme erfasst. Zudem werden mittels aller Sensoren, zweckmäßigerweise zu den gleichen Zeitpunkten, die jeweiligen Messwerte erfasst. In einem weiteren Arbeitsschritt werden mittels Regression und/oder durch Lösung eines Optimierungsproblems die Skalierkonstanten ermittelt. Dabei wird für jeden der Wärmeabgeber der zugeordnete Wärmeanteil ermittelt, wobei hierbei die jeweils zugeordnete Skalierkonstante berücksichtigt ist. Die Skalierkonstanten sind hierbei derart ermittelt, dass die Summe der ermittelten Wärmeanteile zu jedem der Zeitpunkte der bereitgestellten Wärme zuzüglich eines Fehlers entspricht.

Geeigneterweise ist die Anzahl der Zeitpunkte größer als die Anzahl der Skalierkonstanten, die ermittelt werden, also als die Anzahl der Sensoren/Wärmeabgeber. Somit liegt ein überbestimmtes Problem/Gleichungssystem vor. Insbesondere wird zum Ermitteln eine Regressionsmatrix herangezogen. Zum Beispiel wird dabei ein "least square"- oder "recursive least square"- Algorithmus verwendet. Das Verfahren wird vorzugsweise mittels des etwaigen Controllers durchgeführt.

Beispielsweise wird das Verfahren zur Ermittlung der Skalierkonstanten lediglich einmalig durchgeführt, insbesondere nach Inbetriebnahme des Smarthome-Systems. Besonders bevorzugt jedoch wird das Verfahren mehrmals wiederholt, beispielsweise periodisch, wie täglich, oder zumindest nach bestimmten Zeitabschnitten. Somit ist eine Genauigkeit verbessert und ein Anpassen an Änderungen/aktuelle Situationen ermöglicht.

Beispielsweise werden die Zeitpunkte im Wesentlichen beliebig bestimmt. Geeigneterweise sind die Zeitabstände zwischen den Zeitpunkten vorgegeben und zweckmäßigerweise konstant. Beispielsweise wird nach Inbetriebnahme des Smarthome-Systems das Verfahren automatisch gestartet, oder bei einer entsprechenden Aufforderung durch den Nutzer.

Bevorzugt werden die Zeitpunkte derart gewählt, dass lediglich einem der Wärmeabgeber die bereitgestellte Wärme zugeordnet wird. Somit ist eine im Wesentlichen direkte Zuordnung des Wärmeanteils zu der (mittels des Wärmemengenzählers ermittelten) bereitgestellten Wärme ermöglicht, wobei beispielsweise zudem die Raumtemperatur und/oder die Ausgestaltung des Wärmeabgebers berücksichtigt wird. Dabei ist die dem Wärmeabgeber zugeordnete Skalierkonstante lediglich mittels Division der bereitgestellten Wärme durch eine dem Wärmeabgeber zugeordnete Zahl ermittelbar, wobei die Zahl zum Beispiel anhand des jeweiligen Messwerts, der Raumtemperatur und/oder der Ausgestaltung des Wärmeabgebers ermittelt wird. Somit ist ein Aufwand verringert. Vorzugsweise wird dies für jeden Wärmeabgeber mehrmals durchgeführt, und anhand des Mittelwerts der einzelnen Division die jeweilige Skalierkonstante bestimmt.

Beispielsweise wird der jeweilige Zeitpunkt anhand einer vorgegebenen Regelung des Smarthome-Systems bestimmt. Besonders bevorzugt jedoch weist das Smarthome-System einen Aktor zur Einstellung der entsprechenden Wärmeabgeber auf, vorzugsweise die etwaigen Ventile. Dabei wird das Smarthome-System, insbesondere in einem Konfigurationsmodus, derart eingestellt, dass für eine bestimmte Zeitspanne sämtliche Ventile bis auf das einem der Wärmeabgeber zugeordnete geschlossen werden, für den die Skalierkonstante ermittelt werden soll.

Die Zeitspanne ist dabei zweckmäßigerweise größer als 5 Minuten, jedoch kleiner als 5 Stunden. Geeigneterweise ist die Zeitspanne zwischen 1 Stunde, 2 Stunden, 3 Stunden oder 4 Stunden, sodass sich ein Gleichgewicht einstellt. Vorzugsweise erfolgt hierbei ein sukzessives Ermitteln der Skalierkonstanten, wofür die Ventile entsprechend eingestellt werden. Insbesondere werden die Zeitpunkte derart gewählt, dass diese für einen Nutzer nicht wahrnehmbar sind, insbesondere während der Nacht und geeigneterweise zwischen 1:00 Uhr nachts und 5:00 Uhr nachts. Somit ist das Ermitteln der Skalierkonstanten für den Nutzer nicht, oder zumindest nicht störend, wahrnehmbar und führt nicht zu Komforteinbußen, wobei jedoch beim Ermitteln der Skalierkonstanten eine Genauigkeit verbessert und ein Aufwand verringert sind. Beispielsweise sind die Zeitpunkte von einem Hersteller des Smarthome-Systems vorgegeben. Bevorzugt ist es jedoch für einen Nutzer möglich, die Zeitpunkte anzugeben oder zumindest anzupassen, vorzugsweise mittels eines entsprechenden Benutzereingabe. Somit ist eine Anpassung an das Nutzerverhalten verbessert.

Beispielsweise werden die Fehler für die Zeitpunkte als unabhängig voneinander und dem jeweiligen Zeitpunkt angenommen, sodass diese insbesondere nach Art von weißem Rauschen behandelt werden. Alternativ hierzu wird eine Abhängigkeit angenommen, und vorzugsweise wird der Fehler als abhängig von dem jeweiligen Zeitpunkt angenommen. Vorzugsweise werden die Fehler als zeitlich untereinander abhängig von einander angenommen. Zweckmäßigerweise werden dabei die Fehler näherungsweise zeitlich periodisch angenommen. Beispielsweise wird somit angenommen, dass die Fehler nach Art eines farbigen Rauschens ausgebildet sind. Hierbei wird insbesondere ein saisonaler Modellansatz für den jeweiligen Fehler herangezogen. Vorzugsweise wird angenommen, dass der Fehler zu einem der Zeitpunkte im Wesentlichen zu dem Fehler zu einem der anderen Zeitpunkte korrespondiert. Insbesondere besteht zwischen den entsprechenden Zeitpunkten dabei ein Zeitversatz, der beispielswiese konstant ist. Der Zeitversatz beträgt dabei geeigneterweise im Wesentlichen einen Tag. Somit werden Schwankungen während des Tages berücksichtigt, die auf Umweltbedingungen zurückgehen. Alternativ oder in Kombination hierzu beträgt der Zeitversatz einer Woche. Somit können Verluste des Heizsystems und/oder zusätzliche, nicht dem Smarthome-System zugeordnete Wärmeabgeber/Wärmeanteile bei der Berechnung der Skalierkonstanten berücksichtigt werden, was eine Genauigkeit verbessert. Zusammenfassend wird vorzugsweise angenommen, dass der Fehler näherungsweise zeitlich periodisch ist, d. h. nach Art eines farbigen Rauschens ausgebildet ist, beispielsweise mit der Periode, also dem Zeitversatz, die zwischen einem Tag und einer Woche beträgt. Zum Beispiel ist die Periode gleich einem Tag und/oder einer Woche.

Das Smarthome-System weist einen Wärmemengenzähler auf, der geeignet, insbesondere vorgesehen und eingerichtet, ist, einem zentralen Wärmebereitsteller zugeordnet zu werden. Das Smarthome-System umfasst ferner mehrere Sensoren, die jeweils einem Wärmeabgeber zuordenbar sind, und die somit geeignet, zweckmäßigerweise vorgesehen und eingerichtet, sind, dem jeweiligen Wärmeabgeber zugeordnet zu werden, zumindest indirekt. Das Smarthome-System ist gemäß einem Verfahren betrieben, bei dem mittels des Wärmemengenzählers eine von einem zentralen Wärmebereitsteller bereitgestellte Wärme ermittelt und mittels zumindest eines der Sensoren ein Messwert erfasst wird, der die von dem jeweiligen Wärmeabgeber abgegebene Wärme charakterisiert. Anhand der bereitgestellten Wärme und des Messwerts wird ein dem jeweiligen Wärmeabgeber zugeordneter Wärmeanteil ermittelt.

Bei einer Weiterbildung sind zum Beispiel mehrere derartige Wärmemengenzähler vorhanden, die dem zentralen Wärmebereitsteller zugeordnet sind. Beispielsweise sind mehrere Heizkreise vorhanden, wobei jedem der Heizkreise jeweils einer der Wärmemengenzähler zugeordnet ist. Die von dem zentralen Wärmebereitsteller bereitgestellte Wärme ist dann insbesondere die Summe, der mittels jedes der Wärmemengenzähler ermittelten Wärme. Zweckmäßigerweise umfasst das Smarthome-System einen Controller der insbesondere ein Steuergerät des Smarthome-Systems bildet. Hierbei ist der Controller geeignet, insbesondere vorgesehen eingerichtet, mit den Sensoren und/oder dem Wärmemengenzähler signaltechnisch verbunden zu werden, vorzugsweise mittels Funks. Insbesondere ist hierbei der Controller geeignet, insbesondere vorgesehen und eingerichtet, das Verfahren durchzuführen.

Besonders bevorzugt ist hierbei der Controller zudem geeignet, insbesondere vorgesehen und eingerichtet, das Verfahren zur Ermittlung der Skalierkonstanten durchzuführen. Dabei wird für mehrere Zeitpunkte die bereitgestellte Wärme und mittels aller Sensoren ebenfalls für die Zeitpunkte die jeweiligen Messwerte erfasst. Mittels Regression und/oder durch Lösung eines Optimierungsproblems werden die Skalierkonstanten derart ermittelt, dass zu jedem der Zeitpunkte die Summe der mittels der ermittelten Skalierkonstanten ermittelten Wärmeanteile der bereitgestellten Wärme zuzüglich eines Fehlers entspricht.

Der Controller weist beispielsweise einen anwendungsspezifischen Schaltkreis (ASIC) und/oder einen Mikroprozessor auf, mittels dessen zumindest eines der Verfahren zumindest teilweise durchgeführt wird. Insbesondere umfasst der Controller ein Computerprogrammprodukt, das auf einem Speicher abgespeichert ist, und das bei der Ausführung des Programms durch einen Computer, wie den Mikroprozessor, diesen veranlasst, das jeweilige Verfahren durchzuführen. Beispielsweise wird mittels des Controllers das Verfahren direkt durchgeführt. Alternativ dient dieser zum Beispiel als Schnittstelle zu einem externen Rechner (Server), mit dem zumindest ein Teil des Verfahrens durchgeführt wird.

Die Erfindung betrifft ferner ein Computerprogrammprodukt. Das Computerprogrammprodukt umfasst eine Anzahl an Befehlen, die bei der Ausführung des Programms (Computerprogrammprodukts) durch einen Computer diesen veranlassen, ein Verfahren zum Betrieb eines Smarthome-Systems durchzuführen, das einen Wärmemengenzähler und mehrere Sensoren aufweist, die jeweils einem Wärmeabgeber zugeordnet sind. Bei dem Verfahren wird mittels des Wärmemengenzählers eine von einem zentralen Wärmebereitsteller bereitgestellte Wärme ermittelt, und mittels zumindest eines der Sensoren wird ein Messwert erfasst, der die von dem jeweiligen Wärmeabgeber abgegebene Wärme charakterisiert. Anhand der bereitgestellten Wärme und des Messwerts wird ein dem jeweiligen Wärmeabgeber zugeordneter Wärmeanteil ermittelt. Alternativ oder in Kombination hierzu veranlassen die Befehle die bei der Ausführung des Programms (Computerprogrammprodukts) durch den Computer diesen, ein Verfahren zur Ermittlung von Skalierkonstanten durchzuführen. Dabei wird für mehrere Zeitpunkte die bereitgestellte Wärme und mittels aller Sensoren die jeweiligen Messwerte erfasst. Mittels Regression und/oder durch Lösung eines Optimierungsproblems werden die Skalierkonstanten derart ermittelt, dass zu jedem der Zeitpunkte die Summe der mittels der ermittelten Skalierkonstanten ermittelten Wärmeanteile der bereitgestellten Wärme zuzüglich eines Fehlers entspricht.

Der Computer ist zweckmäßigerweise ein Bestandteil eines Controllers und beispielsweise mittels diesem gebildet. Der Computer umfasst vorzugsweise einen Mikroprozessor oder ist mittels dessen gebildet. Das Computerprogrammprodukt ist beispielsweise eine Datei oder ein Datenträger, der ein ausführbares Programm enthält, das bei einer Installation auf einem Computer das Verfahren automatisch ausführt.

Die Erfindung betrifft ferner ein Speichermedium, auf dem das Computerprogrammprodukt gespeichert ist. Ein derartiges Speichermedium ist beispielsweise eine CD-ROM, eine DVD oder eine Blu-Ray Disc. Alternativ hierzu ist das Speichermedium ein USB-Stick oder ein sonstiger Speicher, der zum Beispiel wiederbeschreibbar oder lediglich einmalig beschreibbar ist. Ein derartiger Speicher ist beispielsweise ein Flash Speicher, ein RAM oder ein ROM.

Die im Zusammenhang mit den beiden Verfahren erläuterten Weiterbildungen und Vorteile sind sinngemäß auch auf Smarthome-System / das Computerprogrammprodukt / das Speichermedium sowie untereinander zu übertragen und umgekehrt.

Nachfolgend wird ein Ausführungsbeispiel der Erfindung anhand einer Zeichnung näher erläutert. Darin zeigen:
- Fig. 1: schematisch einen Haushalt mit einem Smarthome-System,
- Fig. 2: ein Verfahren zum Betrieb des Smarthome-Systems, und
- Fig. 3: Verfahren zur Ermittlung von Skalierkonstanten.

Einander entsprechende Teile sind in allen Figuren mit den gleichen Bezugszeichen versehen.

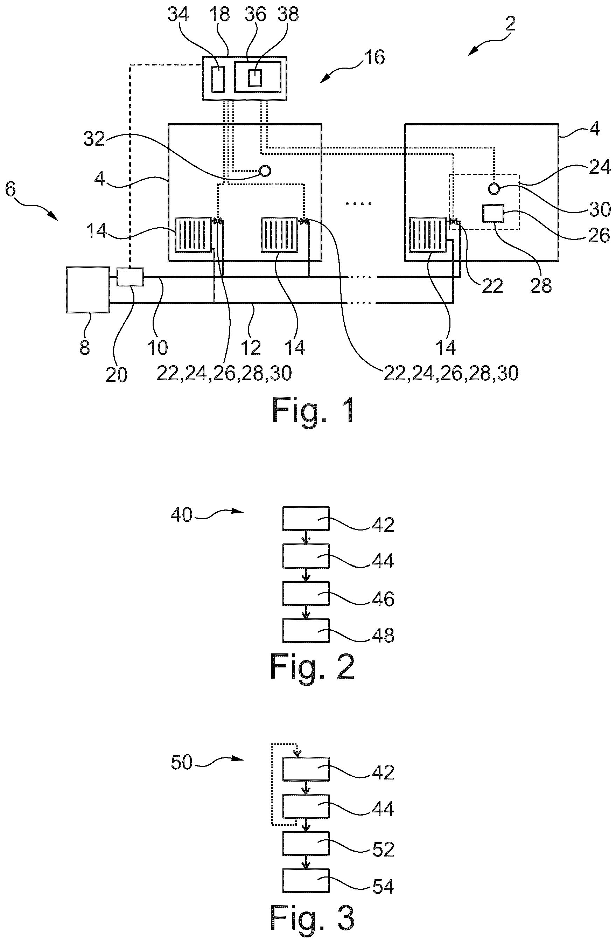

In Figur 1 ist schematisch ein Haushalt 2 dargestellt, der mehrere Räume 4 aufweist, von denen hier exemplarisch zwei gezeigt sind. Der Haushalt 2 weist ein Heizsystem 6 auf, das einen zentralen Wärmebereitsteller 8 aufweist. Der Wärmebereitsteller 8 umfasst eine nicht näher dargestellte Wärmepumpe, mittels derer bei Betrieb ein Fluid, nämlich (Heiz-)Wasser, erwärmt sowie in eine erste Leitung 10 eingeleitet wird, die einen Vorlauf des Heizsystems 6 bildet. Zudem weist das Heizsystem 6 eine zweite Leitung 12 auf, die den Rücklauf des Heizsystems 6 bildet, und mittels derer abgekühltes Heizwasser zu dem Wärmebereitsteller 8 geleitet wird, sodass dieses erneut erwärmt und in die erste Leitung 10 eingeleitet werden kann.

Die erste Leitung 10 und die zweite Leitung 12 sind mittels mehrere Wärmeabgeber 14 verbunden, die zueinander hydraulisch parallelgeschaltet sind. Mit anderen Worten sind die beiden Leitungen 10, 12 mit den Wärmeabgebern 14 (hydraulisch) verbunden. Die Wärmeabgeber 14 sind hierbei beispielsweise nach Art von Radiatoren oder Flächenheizungen, insbesondere Fußboden-, Wand- und/oder Deckenheizungen, ausgestaltet. In dem dargestellten Beispiel sind dem einen der Räume 4 zwei der Wärmeabgeber 14 und dem anderen Raum 4 einer der Wärmeabgeber 14 zugeordnet.

Der Haushalt 2 umfasst ferner ein Smarthome-System 16, das einen (zentralen) Controller 18 aufweist. Der Controller 18 ist signaltechnisch, nämlich mittels Funks, mit einem Wärmemengenzähler 20 verbunden, der der ersten Leitung 10, also dem Vorlauf, zugeordnet ist. Hierbei ist es mittels des Wärmemengenzählers 20 möglich, die Temperatur des Vorlaufs zu messen, also die Temperatur des in der ersten Leitung 10 im Bereich des Wärmebereitstellers 8 geführten Heizwassers. In einer Weiterbildung ist der Wärmemengenzähler 20 zudem der zweiten Leitung 12, also dem Rücklauf, zugeordnet ist, sodass mittels des Wärmemengenzählers 20 die Temperatur des Rücklaufs gemessen werden kann. Zweckmäßigerweise ist zudem der durch die Leitungen 10, 12 geführte Massenstrom mess- oder zumindest ermittelbar, beispielsweise anhand der Betriebsdaten einer nicht dargestellten Pumpe, mittels derer das Heizwasser durch die Leitungen 10, 12 gepumpt wird.

Ferner weist das Smarthome-System 16 mehrere Aktoren auf, die nach Art eines einstellbaren Ventils 22 ausgebildet sind. Die Ventile 22 sind jeweils einem der Wärmeabgeber 14 zugeordnet, und mittels jedes Ventils 22 ist es möglich, das durch den jeweiligen Wärmeabgeber 14 geführte Volumen des Heizwassers einzustellen, also den Volumen- bzw. Massenstrom. Somit ist es möglich, mittels der Ventile 22 die Wärmeaufnahme des jeweils zugeordneten Wärmeabgebers 14 einzustellen. Jedes Ventil 22 ist ein Bestandteil eines jeweiligen Thermostats 24, das ferner eine Steuereinheit 26 umfasst, mittels derer das Ventil 22 eingestellt wird, wofür eine entsprechende elektrische Spannung an dieses angelegt wird. Dabei weist die Steuereinheit 26 einen nicht näher dargestellten Sensor 28 auf, mittels dessen die Ventilstellung erfasst werden kann.

Ferner ist in das jeweilige Thermostat 24 in dem dargestellten Beispiel ein weiterer Sensor 30 integriert, mittels dessen eine Raumtemperatur erfasst werden kann. In Abhängigkeit der mittels des weiteren Sensors 30 erfassten Raumtemperatur wird mittels der Steuereinheit 26 das Ventil 22 entsprechend eingestellt, sodass eine mittels des Controllers 18 vorgegebene Solltemperatur für den jeweiligen Raum 4 realisiert wird. Jedem der Wärmeabgeber 14 ist ein derartiges Thermostat 24 mit dem Ventil 22, der Steuereinheit 26, dem Sensor 28 sowie dem weiteren Sensors 30 zugeordnet, wobei dies lediglich für eines der Thermostate 24 schematisch gezeigt ist.

Zusammenfassend sind die Sensoren 28 jeweils einem der Ventile 22 zugeordnet, mittels derer die Wärmeaufnahme des jeweils zugeordneten Wärmeabgebers 14 eingestellt werden kann. Dabei kann mittels des jeweiligen Sensors 28 ein Messwert erstellt werden, der der Ventilstellung entspricht und somit zu dieser korrespondiert. Die Thermostate 24 sind in dem dargestellten Beispiel mittels Funks mit dem Controller 18 verbunden.

**In** dem dargestellten Beispiel ist dem Raum 4, dem zwei der Wärmeabgeber 14 zugeordnet sind, noch ein zusätzlicher Sensor 32 zugeordnet, der von den beiden zugeordneten Thermostaten 24 und Wärmeabgebern 14 beabstandet ist. Mittels des zusätzlichen Sensors 32 kann dabei die Raumtemperatur vergleichsweise genau gemessen werden.

Der Controller 18 umfasst einen Computer 34 in Form eines Mikroprozessors sowie einen Speicher 36. Auf dem Speicher 36 ist ein Computerprogrammprodukt 38 gespeichert, das eine Anzahl an Befehlen umfasst, die bei der Ausführung des Programms durch den Computer 34 diesen veranlassen ein in Figur 2 dargestelltes Verfahren 40 durchzuführen. Somit ist das Smarthome-System 16 gemäß dem Verfahren 40 betrieben, und das Smarthome-System 16, insbesondere der Controller 18, ist geeignet sowie vorgesehen und eingerichtet, das Verfahren 40 durchzuführen.

In einem ersten Arbeitsschritt 42 wird mittels des Wärmemengenzählers 20 die von dem zentralen Wärmebereitsteller 8 bereitgestellte Wärme ermittelt. Hierfür wird die Vorlauftemperatur, die Rücklauftemperatur und der Massenstrom gemessen. In einem zweiten Arbeitsschritt 44, der im Wesentlichen zeitgleich durchgeführt wird, wird mittels der Sensoren 28 der jeweilige Messwert erfasst, also die Ventilstellung, die die mittels des jeweiligen Wärmeabgebers 14 abgegebene Wärme charakterisiert, nämlich den Volumenstrom des durch den jeweils zugeordneten Wärmeabgeber 14 geführten Heizwassers. Zum Erfassen des jeweiligen Messwerts wird insbesondere der Sollwert für die Ventilstellung ausgelesen. Zudem wird mittels der weiteren Sensoren 30 sowie des zusätzlichen Sensors 32, sofern dieser vorhanden ist, die Raumtemperatur des dem jeweiligen Wärmeabgeber 14 zugeordneten Raums 4 erfasst.

In einem sich anschließenden dritten Arbeitsschritt 46 wird ein dem jeweiligen Wärmeabgeber 14 zugeordneter Wärmeanteil ermittelt. Dabei wird die bereitgestellte Wärme, der jeweilige Messwert sowie die jeweils zugeordnete Raumtemperatur berücksichtigt. Zudem wird auch die Ausgestaltung des jeweiligen Wärmeabgebers 14 berücksichtigt, also insbesondere ob es sich hierbei um einen Radiator oder eine Flächenheizung handelt. Zur Ermittlung des jeweiligen Wärmeanteils wird hierbei zunächst von der Vorlauftemperatur, mittels derer die bereitgestellte Wärme zumindest teilweise beschrieben ist, die jeweilige Raumtemperatur abgezogen. Diese Differenz wird potenziert, wobei der Exponent zwischen 1,2 und 1,4 ist, wenn es sich bei dem zugeordneten Wärmeabgeber 14 um einen Radiator handelt. Falls der Wärmeabgeber 14 hingegen als Flächenheizung ausgestaltet ist, wird als Exponent ein Wert zwischen 1,0 und 1,1 herangezogen. Auf diese Weise wird somit die bereitgestellte Wärme anhand der die zugeordnete Raumtemperatur sowie die Ausgestaltung des jeweiligen Wärmeabgebers 14 berücksichtigt.

Die auf diese Weise erstellte Zahl, die als erster Hilfswert bezeichnet wird, wird mit dem Messwert, also dem Wert für die Ventilstellung, multipliziert, sodass anhand der bereitgestellten Wärme und des jeweiligen Messwerts der dem jeweiligen Wärmeabgeber 14 zugeordneten Wärmeanteil ermittelt wird. Dieses Produkt, das als zweiter Hilfswert bezeichnet wird, wird mit einer dem jeweiligen Wärmeabgeber 14 zugeordneten Skalierkonstanten multipliziert, und das Ergebnis stellt den Wärmeanteil dar. Somit wird bei der Ermittlung des Wärmeanteils die dem jeweiligen Wärmeabgeber 4 zugeordnete Skalierkonstante berücksichtigt.

Bei einer vereinfachten Ausgestaltung wird für den zweiten Hilfswert lediglich der Messwert verwendet, wobei dies lediglich dann erfolgt, wenn die Vorlauftemperatur, also insbesondere die bereitgestellte Wärme, im Wesentlichen konstant ist, und wenn diese größer als die jeweilige Raumtemperatur ist, insbesondere um mindestens 5 K größer. Somit wird bei dieser Ausgestaltung ebenfalls der zugeordneter Wärmeanteil anhand der bereitgestellten Wärme, des jeweiligen Messwerts sowie der Raumtemperatur ermittelt, wobei jedoch die Ausgestaltung des jeweiligen Wärmeabgebers 14 nicht berücksichtigt wird. Bei einer Weiterbildung wird die Raumtemperatur nicht separat ermittelt, wobei dann die zugeordnete Skalierkonstante angepasst ist.

Bei einer alternativen Ausgestaltungsform sind die Sensoren 28 abgewandelt, und diese werden anstatt der weiteren Sensoren 30 verwendet. Somit wird mittels der Sensoren 28 die jeweilige Raumtemperatur direkt gemessen. In diesem Fall wird zur Ermittlung des zweiten Hilfswerts wiederum der erste Hilfswert unverändert ermittelt. Dieser wird dann mit einem Faktor multipliziert, um den zweiten Hilfswert zu erhalten. Der Faktor ist dabei Null, wenn die Temperaturdifferenz zwischen einer Solltemperatur für den jeweiligen Raum 4 und dem Messwert, also dem Istwert für die Raumtemperatur kleiner als 0 ist. Falls hingegen die Temperaturdifferenz größer als Null, jedoch kleiner als ein Schwellwert ist, wird als Faktor der Quotient aus der Temperaturdifferenz und dem Schwellwert herangezogen. Anderenfalls wird als Faktor 1 herangezogen. Zusammenfassend wird auch hier anhand der bereitgestellten Wärme und des Messwerts, nämlich indirekt mittels des Faktors, sowie der Ausgestaltung des jeweiligen Wärmeabgebers 14 der jeweilige Wärmeanteil ermittelt. Bei einer vereinfachten Variante wird als zweiter Hilfswert direkt dieser Faktor herangezogen. Je nach Ausgestaltung des zweiten Hilfswerts ist die jeweils verwendete Skalierkonstante angepasst. Dabei werden stets die Wärmeanteile für sämtliche Wärmeabgeber 14 ermittelt.

In einem sich anschließenden vierten Arbeitsschritt 48 werden die ermittelten Wärmeanteile in dem Speicher 36 abgespeichert, sodass diese von einem Nutzer später jederzeit abfragbar sind. Das Verfahren 40 zum Betrieb des Smarthome-Systems 16 wird stündlich wiederholt, sodass jeweils eine Zeitreihe für die jeweiligen Wärmeanteile in dem Speicher 36 abgespeichert wird.

In Figur 3 ist ein Verfahren 50 zur Ermittlung der Skalierkonstanten dargestellt, das nach der erstmaligen Inbetriebnahme das Smarthome-Systems 16 durchgeführt wird, oder zumindest, wenn ein neues Thermostat 24 installiert wird. Das Verfahren 50 zur Ermittlung der Skalierkonstanten wird dabei ebenfalls von dem Controller 18 zumindest teilweise durchgeführt. Bei dem Verfahren 50 zur Ermittlung der Skalierkonstanten werden ebenfalls zunächst der erste Arbeitsschritt 42 und der zweite Arbeitsschritt 44 durchgeführt, also mittels des Wärmemengenzählers 20 die von dem zentralen Wärmebereitsteller 8 bereitgestellte Wärme ermittelt sowie mittels der Sensoren 28 der jeweilige Messwert erfasst. Dies wird mehrmals durchgeführt, also für unterschiedliche Zeitpunkte. Die Anzahl der Zeitpunkte ist hierbei größer als die Anzahl der Wärmeabgeber 14.

Beispielsweise werden der erste und zweite Arbeitsschritt 42, 44 jeweils nach Ablauf eines Tages durchgeführt oder in einem speziellen Betriebsmodus. Insbesondere wird der Betriebsmodus und somit die oder zumindest einige Zeitpunkte, derart gewählt, dass lediglich einem der Wärmeabgeber 14 die bereitgestellte Wärme zugeordnet wird. Hierfür wird das diesem Wärmeabgeber 14 zugeordnete Ventil 22 vollständig oder zumindest teilweise geöffnet, wohingegen die verbleibenden Ventile 22 vollständig geschlossen werden. Insbesondere erfolgt das Öffnen lediglich eines der Ventile 22 und das Schließen der verbleibenden Ventile 22 zu Zeiten, zu den der Nutzer dies nicht wahrnimmt, insbesondere zwischen 2:00 Uhr nachts und 3:00 Uhr nachts. Hierbei wird geeigneterweise nach dem entsprechenden Einstellen der Ventile 22 für ein Zeitfenster gewartet, beispielsweise 1 Stunde, bevor die bereitgestellte Wärme ermittelt und die Messwerte erfasst werden. Folglich wird als Zeitpunkt jeweils 3:00 Uhr nachts gewählt. In einer Weiterbildung werden in der Zeit zwischen 2:00 Uhr nachts und 3:00 Uhr nachts mehrerer Zeitpunkte gewählt und somit mehrmals die Messwerte erfasst.

Je nach Ausprägung des Smarthome-Systems 16 wird in einem anschließenden fünften Arbeitsschritt 52 anhand der jeweiligen Messwerte sowie sonstiger erforderlicher Werte der entsprechende zweite Hilfswert erstellt. Dann werden mittels Regression und/oder durch Lösung eines Optimierungsproblems die Skalierkonstanten ermittelt. Dabei wird zum Beispiel zunächst eine Annahme für die Skalierkonstanten getroffen, die dann mit dem jeweiligen zweiten Hilfswert multipliziert werden. Die Summe dieser Produkte entspricht dabei der der bereitgestellten Wärme zuzüglich eines jeweiligen Fehlers. Dies wird für sämtliche Zeitpunkte durchgeführt, sodass ein, vorzugsweise lineares, Gleichungssystem vorliegt. Da die Anzahl der Zeitpunkte und somit die Anzahl an Gleichungen größer als die Anzahl der Wärmeabgeber 14 und somit der Anzahl der Skalierkonstanten ist, ist das Gleichungssystem überbestimmt. Die Skalierkonstanten werden dann verändert, bis die Summe der Fehlerquadrate minimal ist. In einer Weiterbildung wird die Summe zum Beispiel gewichtet oder ein sonstiges Kriterium gewählt, anhand derer die Optimierung durchgeführt wird. Zusammenfassend wird insbesondere zur Lösung des Gleichungssystems die Methode der kleinsten Fehlerquadrate verwendet, zum Beispiel ein rekursiver Algorithmus. Vorzugsweise wird die Lösung (des Gleichungssystems) nach der Methode der kleinsten Fehlerquadrate oder eines vergleichbaren Optimierungskriteriums durchgeführt, wofür beispielsweise ein rekursiver Algorithmus verwendet werden kann.

Beispielsweise werden dabei die einzelnen Fehler als unabhängig zueinander betrachtet. Alternativ hierzu werden diese als abhängig von dem jeweiligen Zeitpunkt angenommen. Dabei wird insbesondere angenommen, dass die Fehler zueinander korrespondieren, die im Wesentlichen einen Tag und/oder im Wesentlichen eine Woche auseinanderliegen, sodass ein saisonaler Modellansatz für die Fehler vorliegt.

Zusammenfassend werden somit in dem fünften Arbeitsschritt 52 mittels Regression und/oder durch Lösung eines Optimierungsproblems die Skalierkonstanten derart ermittelt, dass zu jedem der Zeitpunkte die Summe der mittels der ermittelten Skalierkonstanten ermittelten Wärmeanteile der bereitgestellten Wärme zuzüglich des jeweiligen Fehlers entspricht. Je nach Ausgestaltung wird dabei der Fehler als abhängig von dem jeweiligen Zeitpunkt angenommen. Mit anderen Worten werden die Fehler als zeitlich untereinander abhängig von einander angenommen.

In einem sich anschließenden sechsten Arbeitsschritt 54 werden die auf diese Weise ermittelten Skalierkonstanten in dem Speicher 36 abgespeichert. Somit können diese nachfolgend bei der Durchführung des Verfahrens 40 zum Betrieb des Smarthome-Systems 16 verwendet werden.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebene Einzelmerkmale auch auf andere Weise miteinander kombinierbar, ohne den Gegenstand der Erfindung zu verlassen.

### Bezugszeichenliste

- 2: Haushalt
- 4: Raum
- 6: Heizsystem
- 8: Wärmebereitsteller
- 10: erste Leitung
- 12: zweite Leitung
- 14: Wärmeabgeber
- 16: Smarthome-System
- 18: Controller
- 20: Wärmemengenzähler
- 22: Ventil
- 24: Thermostat
- 26: Steuereinheit
- 28: Sensor
- 30: weiterer Sensor
- 32: zusätzlicher Sensor
- 34: Computer
- 36: Speicher
- 38: Computerprogrammprodukt
- 40: Verfahren
- 42: erster Arbeitsschritt
- 44: zweiter Arbeitsschritt
- 46: dritter Arbeitsschritt
- 48: vierter Arbeitsschritt
- 50: Verfahren
- 52: fünfter Arbeitsschritt
- 54: sechster Arbeitsschritt

## Patentansprüche

1. Verfahren (40) zum Betrieb eines Smarthome-Systems (16), das einen Wärmemengenzähler (20) und mehrere Sensoren (28) aufweist, die jeweils einem Wärmeabgeber (14) zugeordnet sind, bei welchem
- mittels des Wärmemengenzählers (20) eine von einem zentralen Wärmebereitsteller (8) bereitgestellte Wärme ermittelt wird,
- mittels zumindest eines der Sensoren (28) ein Messwert erfasst wird, der die von dem jeweiligen Wärmeabgeber (14) abgegebene Wärme charakterisiert, und
- anhand der bereitgestellten Wärme und des Messwerts ein dem jeweiligen Wärmeabgeber (14) zugeordneter Wärmeanteil ermittelt wird.

2. Verfahren (40) nach Anspruch 1,
**dadurch gekennzeichnet,**
**dass** der Wärmeanteil in einem Speicher (36) abgespeichert wird.

3. Verfahren (40) nach Anspruch 1 oder 2,
**dadurch gekennzeichnet,**
**dass** die Sensoren (28) einem jeweiligen Ventil (22) zugeordnet sind, mittels dessen eine Wärmeaufnahme des jeweiligen Wärmeabgebers (14) eingestellt werden kann, wobei der Messwert zu einer Ventilstellung korrespondiert.

4. Verfahren (40) nach einem der Ansprüche 1 bis 3,
**dadurch gekennzeichnet,**
**dass** bei der Ermittlung des Wärmeanteils eine dem jeweiligen Wärmeabgeber (14) zugeordnete Raumtemperatur berücksichtigt wird.

5. Verfahren (40) nach einem der Ansprüche 1 bis 4,
**dadurch gekennzeichnet,**
**dass** bei der Ermittlung des Wärmeanteils eine Ausgestaltung des jeweiligen Wärmeabgebers (14) berücksichtigt wird.

6. Verfahren (40) nach einem der Ansprüche 1 bis 5,
**dadurch gekennzeichnet,**
**dass** bei der Ermittlung des Wärmeanteils eine dem jeweiligen Wärmeabgeber (14) zugeordnete Skalierkonstante berücksichtigt wird.

7. Verfahren (50) zur Ermittlung von Skalierkonstanten nach Anspruch 6, bei welchem
- für mehrere Zeitpunkte die bereitgestellte Wärme und mittels aller Sensoren (28) die jeweiligen Messwerte erfasst werden,
- mittels Regression und/oder durch Lösung eines Optimierungsproblems die Skalierkonstanten derart ermittelt werden, dass zu jedem der Zeitpunkte die Summe der mittels der ermittelten Skalierkonstanten ermittelten Wärmeanteile der bereitgestellten Wärme zuzüglich eines Fehlers entspricht.

8. Verfahren (50) nach Anspruch 7,
**dadurch gekennzeichnet,**
**dass** die Zeitpunkte derart gewählt werden, dass lediglich einem der Wärmeabgeber (14) die bereitgestellte Wärme zugeordnet wird.

9. Verfahren (50) nach Anspruch 7 oder 8,
**dadurch gekennzeichnet,**
**dass** der Fehler als abhängig von dem jeweiligen Zeitpunkt angenommen wird.

10. Smarthome-System (16), das einen Wärmemengenzähler (20) und mehrere Sensoren (28) aufweist, und das gemäß einem Verfahren (40) nach einem der Ansprüche 1 bis 6 betrieben ist.
